# EUROPEAN PATENT SPECIFICATION

(11) **EP 1 021 785 B1**
(45) Date of publication and mention of the grant of the patent: **29.12.2004**
(21) Application number: 97939093.7
(22) Date of filing: 10.09.1997
(51) Int. Cl.: G06K 9/00, H05K 3/42

(54) **FINGERPRINT DIGITIZER WITH DEFORMABLE SUBSTRATE**
FINGERABDRUCKDIGITALISIERER MIT VERFORMBAREM SUBSTRAT
NUMERISEUR D'EMPREINTES DIGITALES DOTE D'UN SUBSTRAT DEFORMABLE

(30) Priority: 10.09.1996 GB 9618879; 10.09.1996 GB 9618878
(43) Date of publication of application: 26.07.2000
(73) Proprietor: Personal Biometric Encoders Ltd., Surbiton KT6 7EL (GB)
(72) Inventor: ROSS, William, Leslie, Surbiton KT6 7EL (GB)
(74) Representative: Vleck, Jan Montagu
(86) International application number: PCT/GB1997/002451
(87) International publication number: WO 1998/011500

(56) References cited:
- EP-A- 0 459 808
- US-A- 4 862 743
- US-A- 4 894 635
- US-A- 5 373 181
- US-A- 5 483 100

## Description

This invention relates to electrical circuits and circuit elements. Preferred embodiments of the invention relate to digitizers comprising an array of individually actuable sensing cells for producing a bit map of a sensed pattern or feature. Such digitizers may be fingerprint sensors comprising an array of sensing cells each being defined by a contact switch.

Integrated circuit (IC) fabrication consists of a sequence of processing steps referred to as unit step processes that are, in the prior art, carried out on a slice of a semiconductor such as silicon which defines a substrate providing both mechanical support for the resultant IC and the basic material for producing the various desired circuit elements.

These unit step processes include the introduction and transport of dopants to change the conductivity of the semiconductor substrate, the growth of thermal oxides for inter- and intra-level isolation within the IC, the deposition of insulating and conducting films, and the patterning and etching of the various layers in the formation of the IC.

The known methods of IC fabrication use a semiconductor substrate. Such substrates must be produced under strictly controlled conditions and are therefore expensive. Furthermore, the semiconductor substrate results in a rigid and brittle IC which is easily damaged and is incapable of effectively withstanding any significant applied bending moment. The semiconductor material is difficult to drill or cut. The processing of semiconductor materials such as silicon requires significant numbers of different processing steps (etching, masking etc) using toxic chemicals. This makes the processing of semiconductors and the disposing of the associated waste expensive and time consuming.

US-A-4 862 743 (SEITZ PETER) 5 September 1989 discloses a pressure sensor based on capacitive elements which are arranged on one surface of an elastically deformable substrat.

EP-A-0459808 (G.E.C.- Marconi Limited - now assigned to Personal Biometric Encoders Limited) discloses a sensor construction producing a digitiser of high resolution capable of discerning a pattern of applied low differential pressures. This known digitiser is intended for use as a fingerprint sensor.

The prior art sensors such as that described in EP-A-0459808, comprise a non-deformable insulating substrate on whose upper surface alternate layers of conducting and insulating material are deposited (by plating or vacuum deposition) to produce a first set of parallel conductors separated from, overlying, and at right angles to a second set of parallel conductors.

Such prior art sensors are constructed using techniques similar to those used in the manufacture of integrated circuits on silicon slices (ie unit step processes).

A non-deformable insulating substrate is masked and then coated with metal to form a plurality of parallel row electrodes forming a first set of conductors. Metal contact pads connected to the rows of electrodes by a thin film Nichrome resistor element are also deposited on the substrate.

An insulant such as polyimide is then deposited on top of the row electrodes, Nichrome resistors and associated contact pads. Vias are provided in the polyimide layer over each contact pad.

A second deposition of metal is then effected on this first polyimide layer to provide parallel column electrodes forming a second set of conductors orthogonal to the row electrodes. This second deposition of metal defines not only the column electrodes but also second contact pads, electrically integral with the column electrodes, and also provides a third set of electrically separate contact pads which extend through the first vias in the first polyimide layer into electrical contact with the first set of contact pads.

As well as being expensive and requiring a large number of processing steps to produce a digitiser, the use of a non-deformable insulating substrate renders the prior art sensors brittle and unsuitable for use on a flexible carrier such as a plastics card of the sort used for credit cards.

The invention is set out in appended method claims 1 and 12 relating to a method of fabricating a digitiser or an integrated circuit as defined in claims 1 and 12 respectively, and an apparatus claims 20 and 23 relating to a digitiser or an integrated circuit respectively. Preferred features of the invention are defined in the claims dependent thereon.

In a preferred embodiment of the method according to the invention, a deformable insulating sheet is coated with a conductive or semiconductive material, conductive or semiconductive material is removed from a first surface of the coated sheet to form a plurality of discrete first electrical elements, conductive or semiconductive material is removed from a second surface of the coated plastics sheet to form a plurality of discrete second electrical elements separated from and crossing the first conductors, and conductive vias are provided through the deformable support, each conducting via being electrically connected to a second electrical element and a contact pad on the first surface of the deformable support.

The methods of the present invention allow one to produce an integrated circuit or sensor with a minimum of processing steps. The elimination of the need to remove significant quantities of semiconductor from the circuit or sensor substrate by a progressive series of masking, etching, cleaning, and drying or stoving (baking at high temperatures) steps greatly reduces the manufacturing costs of the sensor or integrated circuit.

The conductive through vias of the invention also allow for more efficient convection of air through the device built according to the invention and therefore help to prevent the device over-heating.

The use, in preferred embodiments of the present invention, of a substrate consisting of a plastics insulating material such as a polyimide, polyester, polyethylene, polystyrene, polyethylene terephthalate or ceramics, which is coated with a thin layer of a conductive material such as stainless steel, chromium or titanium results in a substrate which can be processed on both its primary and secondary sides to produce separate circuit elements. The choice of material deposited on the substrate depends on the desired electrical properties of the relevant portion of the circuit.

The plastics substrate can also be easily processed by, say, laser ablation, to establish conductive vias through the substrate for electrically connecting the electrical elements on opposite sides of the plastics substrate. Alternatively, capacitors may be produced by keeping conducting elements separated by at least part of the thickness of the substrate. An additional advantage of the plastics substrate is that it is easier and cheaper to produce than a silicon substrate of the necessary purity.

In preferred embodiments of the invention concerned with a sensor including overlying separated sets of parallel conductors, the provision of the two sets of conductors on the upper and lower surfaces of the support, and the use of the coating on a plastics support to define these conductors obviates the need for a significant proportion of the masking and coating steps required in the prior art.

In a preferred embodiment of the invention, a deformable support or substrate is formed by an insulator having a coating of a conductor such as stainless steel. Sheets of insulants such as polyimide (e.g. Kapton - Trade Mark) are commercially available with a stainless steel coating. A deformable support made of polyimide coated with stainless steel is therefore readily and cheaply available. Furthermore, the use of a coating having stainless steel which has a significant resistivity obviates the need for the deposition of separate resistor elements of Nichrome (or a similar material) as is necessary in the EP 0 459 808 device. This significantly reduces the costs associated with production of a digitising sensor.

In a preferred embodiment of the invention, a plastics substrate such as KALADEX (ICI trade mark for a polyester product), MYLAR, KAPTON (Du Pont trade marks for polyimide and polyethylene products respectively) or UPILEX (UBE trade mark for polystyrene product) is coated with a patterned layer of titanium on which gold is deposited.

Specific embodiments of the present invention will now be described, by way of example, and with reference to the accompanying drawings, in which:
**FIGURE 1** is a schematic plan view of an array of sensing cells defining a sensor;
**FIGURE 2** is a section through a portion of the line I-I illustrating the construction of a known fingerprint sensor;
**FIGURES 3 and 4** are further views illustrating patterns of conductors on a substrate constructed in a known manner;
**FIGURE 5** shows a fingerprint sensor including an electrical circuit embodying aspects of the present invention;
**FIGURES 6a to 6h** are a diagrammatic representation of a method embodying aspects of the present invention;
**FIGURES 7a to 7d** are a diagrammatic representation of an alternative method embodying the present invention ;
**FIGURE 8** is a diagram illustrating a flow line production line suitable for implementing the method of figures 7a to 7d;
**FIGURE 9** is a schematic plan view of the underside of a fingerprint sensor embodying aspects of the present invention;
**FIGURE 10** illustrates an interdigitated configuration for paired contact pads suitable for use with sensors embodying aspects of the present invention; and
**FIGURE 11** illustrates part of the pattern of conductive material on the substrate surface for connecting the actuated sensor to the associated circuitry..

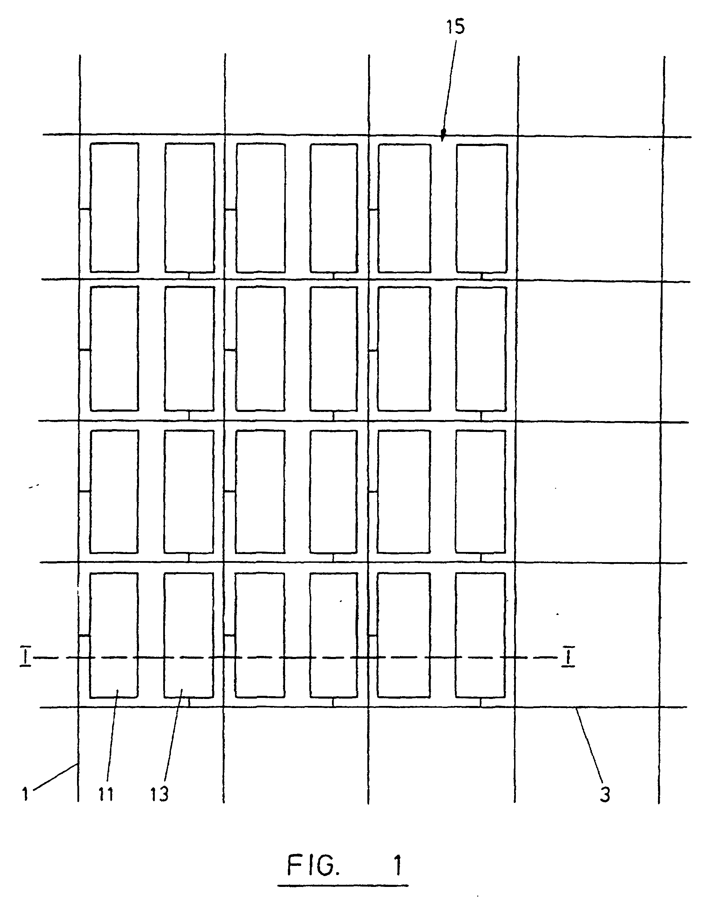

Referring to Figure 1, a matrix of sensing cells 15 is defined by the cross-over points of a first set of parallel conductors 1 overlaid by a second set of parallel conductors 3 perpendicular to the first set of parallel conductors 1. Each of the first set of conductors defines an input bus and each of the second set of conductors defines an output bus. The input buses are connected to a power supply circuit and the output buses to a circuit containing the logic units for analysing the sensor output.

Each sensing cell 15 includes a contact pad 11 connected with one of the first set of conductors 1 and a second contact pad 13 connected to one of the second set of conductors 3. Current/information flows from the input bus conductor 1 of an activated cell to the output bus of the cell 15 when the two contact pads 11,13 are electrically connected by a contact bridge brought into contact with the two pads 11,13 in response to pressure applied to the sensor above the respective sensing cell.

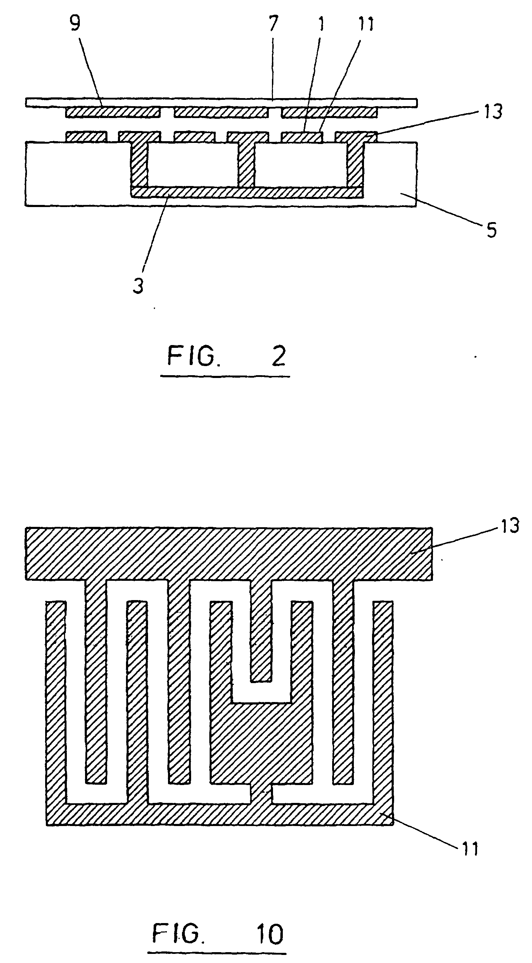

Referring to figure 2, the conductors 1,3 of a known fingerprint sensor are supported on a substrate 5 and the sensor also comprises a resiliently deformable membrane 7 supported above the conductors 1,3 and having conductive tiles 9 on its lower'surface.

Deformation of the resilient membrane 7 by, say, the ridge of a fingerprint pattern brings one of the conductive tiles 9 into contact with contact pads 11, 13 associated respectively with, one of the first conductors 1 and one of the second conductors 3 at the cross-over point of the conductors so as to bridge the gap between the two conductors. Current/information can then flow from the input bus to the output bus via the contact or conductive tile 9. Each cell has an associated resistance resulting in a potential drop across a cross-over point bridged by the conductive tile.

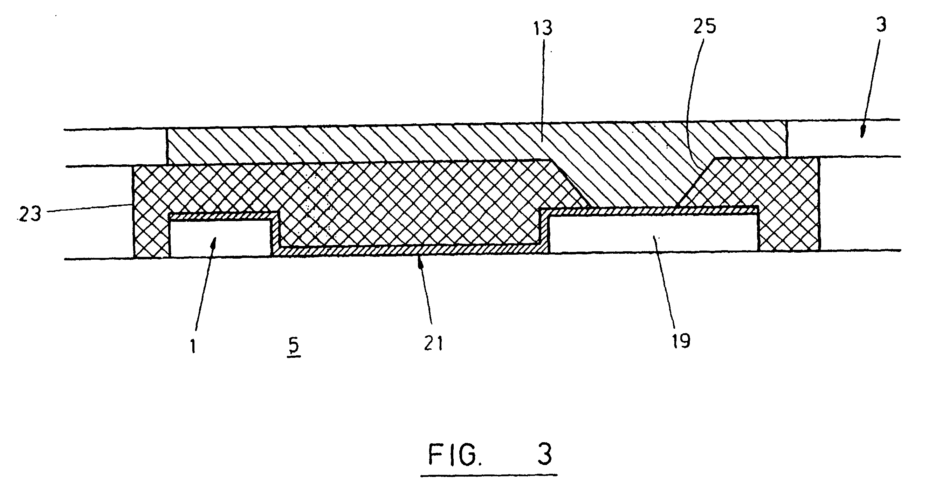

In the embodiment of the invention illustrated in figure 3, the array of paired contact pads 11,13 and the associated conductors 1,3 forming the input and output buses, is supported by a deformable support or substrate. It has been found advantageous to replace the undeformable substrate of the prior art devices with a deformable substrate made from a flexible material such as KALADEX (ICI trade mark for a polyester product), MYLAR, KAPTON (Du Pont trade marks for polyimide and polyethylene products respectively) or UPILEX (UBE trade mark for polystyrene product).

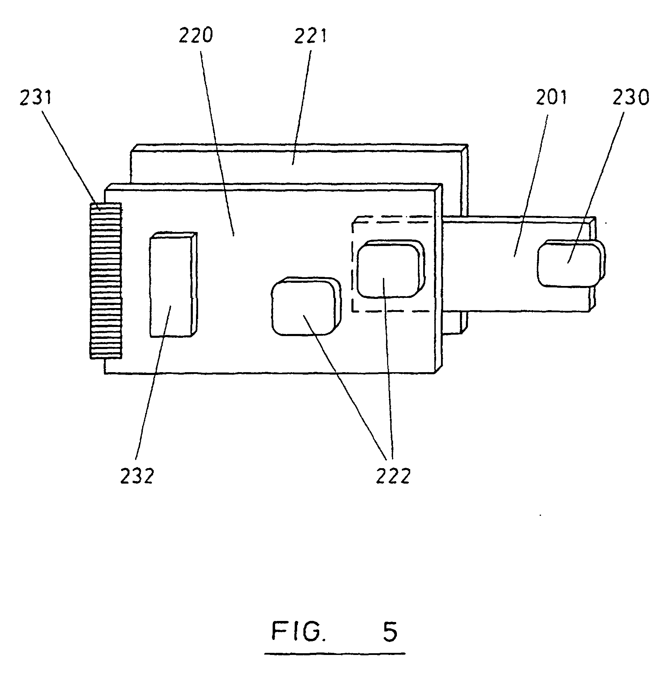

The fingerprint digitizer (see figure 5)of embodiments of the present invention is preferably incorporated into a card-like assembly which includes a connector 231 for inserting into a card receiving port so as to allow the transfer of information between the card and a data processing facility or similar, connected to the card receiving port. The card assembly has an integral memory and data processing facility 232 as well as a sensor or digitising portion. Suitable cards may be modified PCMCIA (Personal Computer Memory Card International Association) cards.

In the embodiment of figure 5, a plastics substrate 201 having a pattern of conductors on its upper and lower surfaces is held between two printed circuit boards 220, 221 each having integral ASICs 222 (application specific integrated circuits). The inner surfaces of the printed circuit boards each have contacts which, in the assembled sensor, connect the ASICs with contact portions 223 on the plastics substrate 201. As will be described below these contact portions are themselves connected to the digitizer electrodes/conductors formed by the overlying conductor arrangement having mutually perpendicular sets of parallel spaced electrodes.

One of the ASICs is a driver circuit which supplies current/information to the first, input bus, set of parallel conductors or electrodes of the digitizer matrix, and the other ASIC is a sensing circuit connected to the second, output bus, set of parallel conductors or electrodes so as to receive any current/information which flows from the driver circuit on operation by the presence of a fingerprint epidermal ridge of the switches comprising the digitizer. The ASICs, on-card data processing and on-card memory combine to produce a signal representative of the identifying features of a sensed fingerprint pattern.

A first active surface of the sensor substrate includes a pattern of conductive material defining a sensing or digitising area 230 containing a first set of parallel electrodes or conductors (forming input buses), which are connected by conductive tracks 224 to contact portions 223 for connecting the first set of electrodes to the contacts of the driver circuit located on the inner surface of one of the printed circuit boards. The second opposite surface of the sensor substrate includes a pattern of conductive material defining a second digitizer area corresponding to that on the opposite substrate surface and having a second set of parallel electrodes or conductors perpendicular to the first set. The pattern of conductive material on the second surface also defines conductive tracks 224 and contacts 223 for connecting the second set of electrodes (output buses) to the contacts of the sensing circuit on the inner surface of one of the printed circuit boards.

The driver and sensing circuits or ASIC s may be arranged the other way round so that it is the driver circuit which is on the active side of the coated substrate.

The substrate includes an array of vias through the substrate from its first to its second surfaces. Each via corresponds to a cross-over point of the two sets of mutually perpendicular parallel electrodes or conductors 1,3. Those electrodes on the active or sensing surface of the substrate include a set of first contact pads 11 at each cross-over point, and those electrodes on the opposite substrate surface are electrically connected through the vias with a set of second contact pads 13 at each cross-over point, and separated from the respective first contact pads of each cross-over point. The first and second contact pads and via associated with each cross-over point define an electrical resistance associated with each cross-over point.

The portion of the substrate not sandwiched between the two printed circuit boards includes the sensing or digitizer portion 230 of the patterned plastics substrate. This portion of the substrate is folded over and fixed to the card assembly such that the sensing area defined by the paired contact pads 11,13 (see figure 10) is exposed on the surface of the card assembly. A resilient membrane defining contact bridges is fixed to the card assembly over the sensing area so as to define digitizer switches in combination with the sensing area contact pads. Contact bridges are brought into contact with the paired contact pads 11,13 of cross-over points on deformation of the resilient membrane in response to the presence of contact with an epidermal ridge so as to connect the paired first and second contact pads of cross-over points corresponding to the location of fingerprint epidermal ridges.

The card assembly may include a protective sheath such that only the sensing area of the folded substrate is exposed. The resilient membrane may also be attached to the protective sheath.

A possible deformable membrane construction 7 having the contact bridges is described in our co-pending application no. filed together with and on the same day as this application. The membrane 7 is of a material such as MYLAR or KAPTON (trade marks) and, at a thickness of less than 12 µm (preferably about 3 µm), has the necessary properties of strength and deformability. On its surface confronting the matrix, the membrane 7 has a continuous conductive layer 17 of a doped polyaniline copolymer having a sheet resistivity of 30 kΩ/□. This layer 17 can be coated or sprayed onto the MYLAR or KAPTON sheet before this is attached to the sensor. The conductive layer 17 is not connected to a voltage or potential source other than when it connects to electrodes 1, 3 and current flows through it across the gap between the contact pads 11, 13.

The use of a sensor having a flexible substrate and a flexible upper membrane improves conformance of the sensor membrane to the contours of an applied fingerprint and allows for accurate measurement of a pattern.

In addition plastics substrates are considerably easier and cheaper than silicon and rigid substrates to both produce in the first place, and subsequently process to produce electrical circuits and circuit elements.

The use of a sensor having a plastics substrate allows one to significantly reduce the cost of producing a digitizer comprising an array of sensing cells which respond to the presence or absence of a fingerprint epidermal ridge. The plastics substrate is considerably cheaper than the silicon substrates of the known digitizers. It is also considerably easier to process a plastics substrate to produce the mutually perpendicular sets of overlying and separated electrodes or conductors than to manufacture a digitizer having a silicon or semi-conductor substrate as is proposed for the known fingerprint digitizers.

It is desirable to be able to put fingerprint sensors on a portable carrier such as a plastics credit card (or similar plastics carrier) or a smart card such as a PCMCIA card. Fingerprints are difficult to forge and fingerprint sensors are therefore a useful form of identification in any transaction authorising environment. Consequently, fingerprint sensors whose circuitry is suitable for locating on portable cards are particularly advantageous.

Portable plastics cards and smart cards require a degree of flexibility so as to cope with the bending moments and stresses associated with their transport, storage and use. Plastics cards will typically accommodate a bending of up to about 90° and fingerprint sensors mounted on a plastics card such as a credit or charge card should therefore be able to cope with the bending. Although mounting the sensor towards one edge of the card reduces the bending which the mounted sensor needs to cope with, the mounted sensor may still be subjected to bending moments sufficient to damage a rigid sensor.

A solution has been to mount a rigid silicon-based sensor on a flexible mounting which absorbs the strain associated with bending of the plastics carrier.

The use of a thin film of a deformable plastic such as a polyimide, polyester, polystyrene, or polyethylene terephthalate coated with a thin layer of, for example a conductive metal such as gold to produce the circuit elements, results in a sensor which can be bent through very significant angles (up to about 180°) without being damaged. Although this degree of flexibility is not required for all embodiments of the invention, some embodiments of the present invention allow a sensor approximately 10-15 mm square mounted towards the edge of a plastics carrier approximately 8-9 cm (standard credit cards are 8.5 cm by 5.5cm) to flex sufficiently so as to bend together with a plastics credit card bending through angles of up to 90° without damage to the sensor.

The plastics substrate suitable for in the invention must be capable of withstanding the likely mechanical stresses and environmental conditions to which it is likely to be subjected, as well as have the necessary electrical and machinability properties.

Polyethylene terephthalate or polyimide sheets 10 to 50 µm thick have been found to be highly suitable as substrates for fingerprint digitisers as they can be metallised and subsequently machined or etched by established processes, and they are able to meet the necessary performance parameters.

Particularly desirable material properties of substrates for a fingerprint digitiser circuit are found to be as follows:
a) a high tensile strength with a Youngs Modulus in the range 3000 to 6000MPa; 5500 MPa is a preferred value;
b) low thermal shrinkage i.e. dimensionally stable throughout the temperature range -10°C and 250°C. A glass transition temperature greater than 200°c is preferred;
c) plastics sheet should be flexible, whilst easy to handle without causing wrinkles. A thickness of 25µm is suitable for KAPTON or MYLAR substrates.
d) Plastics should be easy to machine using conventional machine tools, and preferably also lasers.
e) good resistance to hydrolysis - ideally less than 0.8% in twenty-four hours at 25°C;
f) good resistance to corrosive agents such as strong acids and alkalis, sodium hydroxide, acetic acid and similar;
g) high sheet resistance (10¹⁶ Ω/□;
h) high contact and bulk resistance (volume resistivity 10¹⁸ Ωcm;
i) relatively high melting point - 125 to 250° - preferably 250°C.

In order to maximise the life of the fingerprint sensor or electrical circuit, the plastics properties should be stable throughout the circuit's intended life.

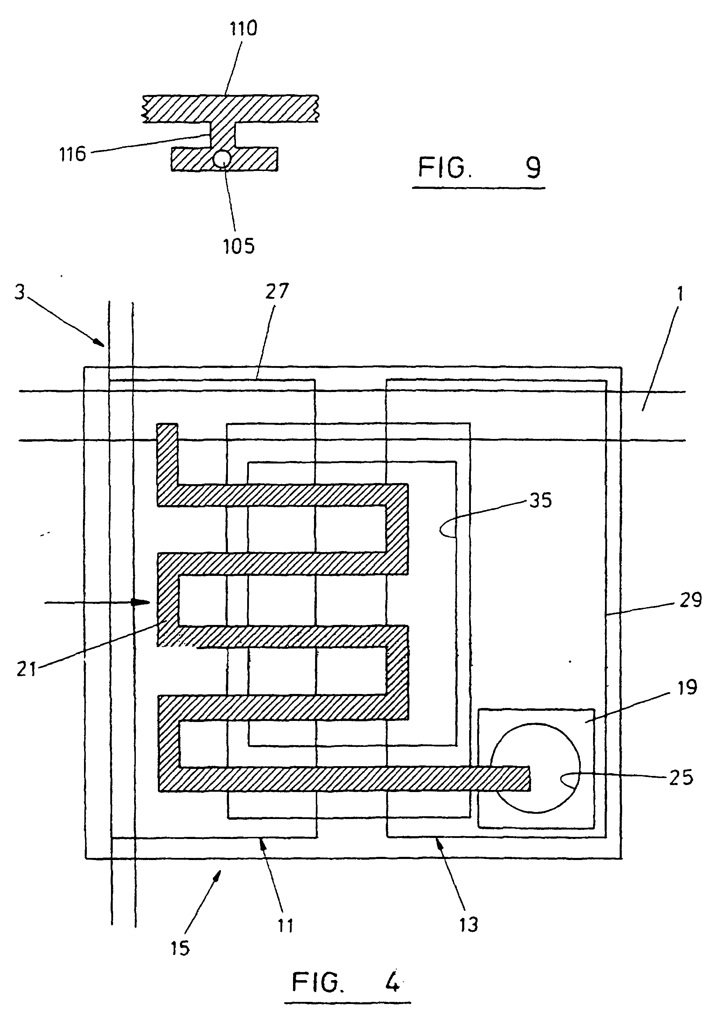

Methods of manufacturing electrical circuits will now be described with reference to figures 4 to 6.

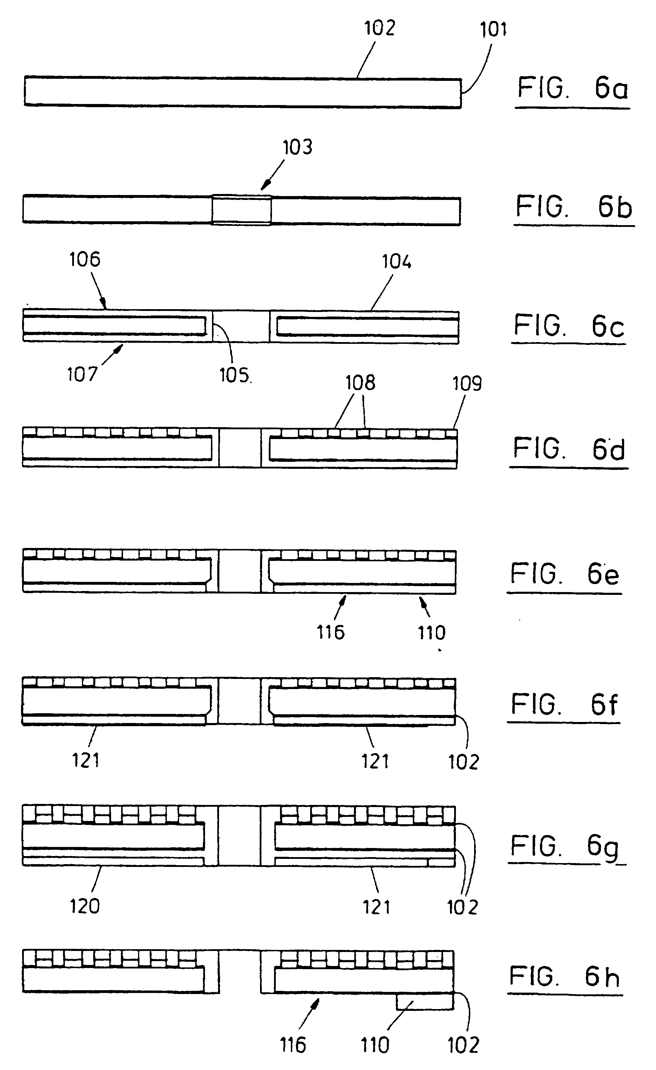

In the fingerprint sensor embodiment of Figure 6 a 36 µm polyimide sheet 101 is covered with a 0.01 µm stainless steel coating 102 (see Fig.6a). A matrix of 10 µm diameter holes 103 is then made through the sheet by, for example laser ablation (see Fig.6b). The laser power and exposure depends on the thickness of the steel coating and polyimide sheet. The holes 103 are made at a density corresponding to the desired resolution of the fingerprint sensor. The resolution of the sensor can also be influenced by staggering or offsetting alternative rows of vias. A hole 103 is made for each sensing cell in the sensor array. For a uniform via configuration with vias defining the corners of squares, the inter hole pitch is approximately 100 µm for a 100 µm cell and approximately 50 µm for a 50 µm sensing cell.

The holed sheet is then uniformly covered with a 0.5 µm copper layer 104 by, say, a low build electroless process (see figure 6c). This establishes conductive vias 105 between the coated conductive upper 106 and lower 107 surfaces of the sheet.

Interdigitated (see figure 10) upper (or active) surface cell contacts 108 and row buses 109 are then configured on the upper surface by, say, laser ablation (see fig. 6d). One contact of each cell is connected to the conductive via and the other separate contact is connected to an associated row bus 109. The lower surface 107 of the sheet is then processed by, say, laser ablation, so as to be configured to form the cell resistors 116 and column buses 110; one column bus 110 and one cell resistor 116 being connected to each conductive via 105 (see figures 6e and 9).

The cell resistors 116 are then masked with a masking material 121 before both the upper and lower surface circuits defined by the remainder of the stainless steel and copper layer are electroplated with gold 120 so as to improve their conductivity (see figs. 6f and 6g). The cell resistors 116 are not coated as a high resistance relative to the gold contact resistances is desired. The use of gold contact pads results in a very effective contact switch, particularly when used in combination with contact bridges made from a conductive polymer such as a doped polyaniline copolymer. Other high conductivity materials (eg, silver) may be used in lieu of gold although gold has been found to be particularly effective. Similarly, the stainless steel coating may be replaced by a coating of another conductive metal such as chromium or titanium. The combination of a gold layer on titanium has been found to be particularly advantageous.

Finally (see figure 6h) the mask resist is retrieved from the cell resistor 116 and the sheet is etched with, say, an ammonium based solution to remove the electroless copper from the resistor. The resistance of the cell resistor 116 is then defined by the electrical properties and dimensions of the steel only.

Referring to figure 9, the column bus 110 associated with each cell is connected with the respective conductive via 105 by the cell resistor 116

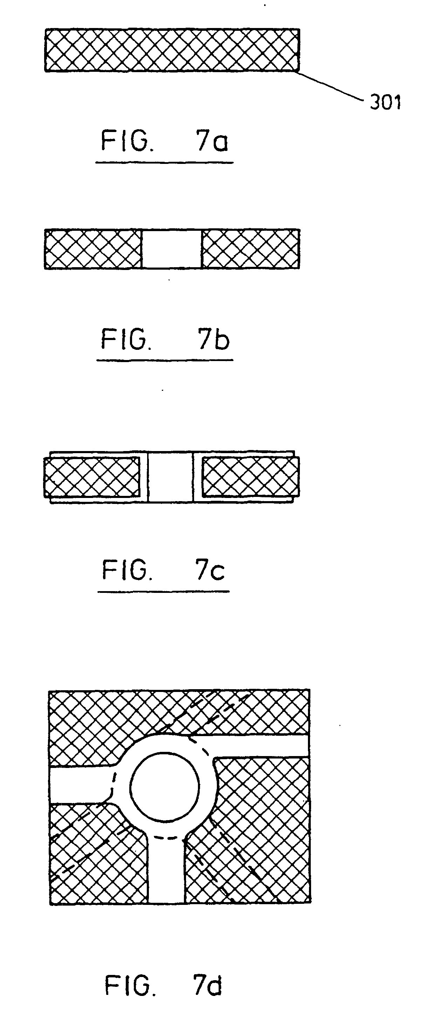

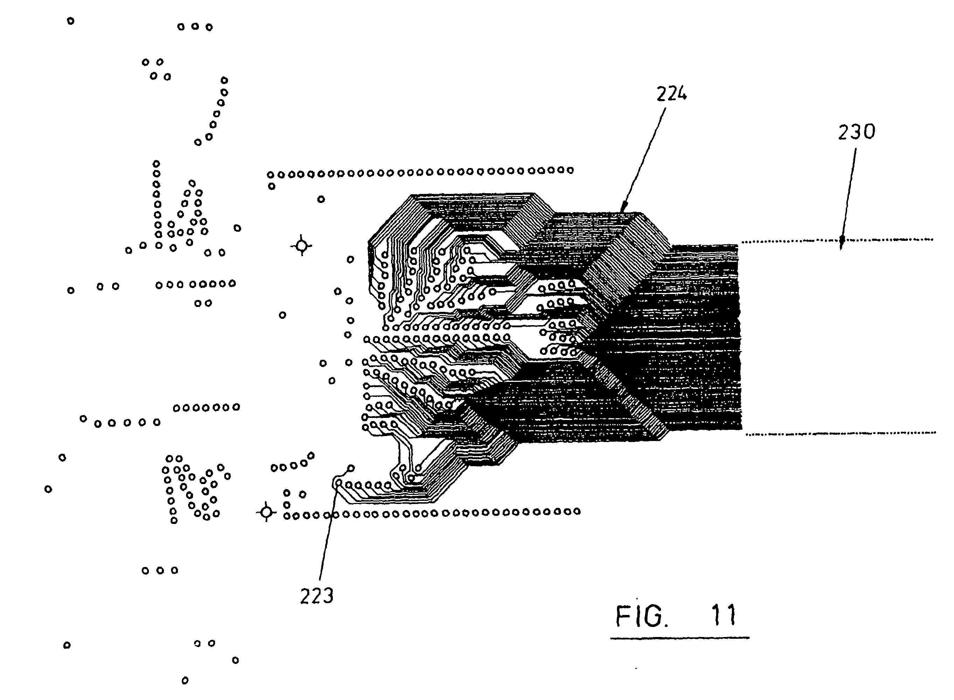

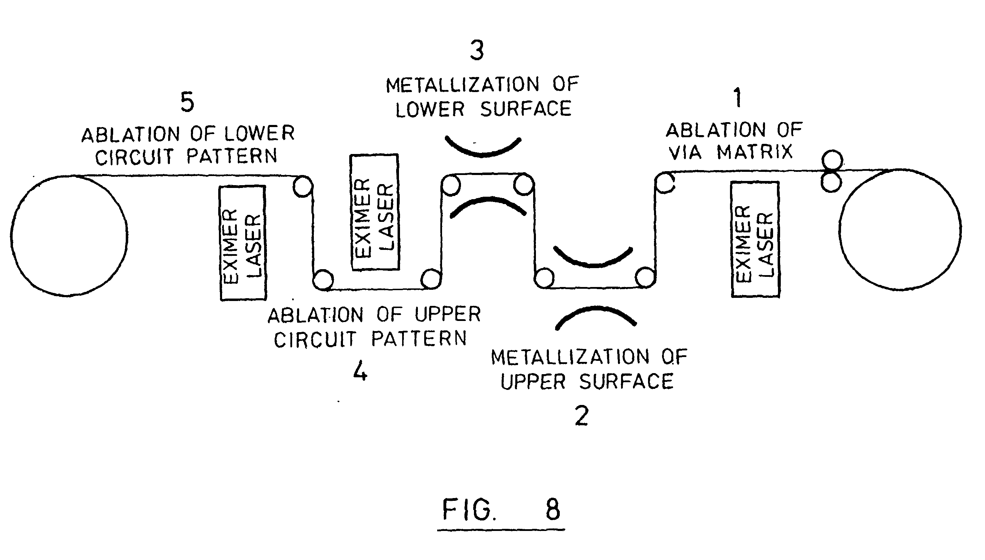

In the alternative method shown in figures 7 and 8, a thin sheet 301(approximately 20µm - although it is possible to use thinner sheets, this leads to handling problems) of a suitable plastics material such as KAPTON, MYLAR, UPILEX or KALADEX forms the substrate or support.

An even array of vias 303 (see figure 7b) is drilled through the plastics sheet. This has been done by laser ablation using approximately 300 shots of a laser of 400 mJ/cm² Use of a more powerful laser would allow one to reduce the necessary exposure. As discussed below, the dimensions and shape of the vias are important as the surface area of the inside of the vias determines the electrical resistance of each sensing cell. In a preferred embodiment the via is produced by drilling overlapping circular holes such that each via is substantially oval or bean-shaped and is about 12.5 µm by 22.5 µm

The surfaces of the drilled plastics sheet are then cleaned. This can be done by scanning with a low intensity laser (single shot of approximately 200 mJ/cm². This laser cleaning removes debris and produces a non-glossy or matt finish on the substrate surface. This finish aids the subsequent coating of the substrate with a conductive material.

The cleaned drilled plastics substrate is then coated (see figure 7c) with a thin (approximately 500 Å) layer of titanium. The titanium is sputtered onto the substrate by, for example, ion assisted sputtering. The sputtering is done at a variety of angles to the substrate surface so as to ensure that the surfaces inside the vias are entirely coated with titanium.

A thin layer of gold (approximately 0.1 µm or 1000 Å) is then sputtered onto the titanium (see figure 7c) to produce a metallised substrate with an outer layer of gold on an inner layer of titanium which is itself fixed to the plastics substrate. As with the titanium coating the direction of sputtering is varied to ensure an even layer extending through the via. The thickness of the gold and/or titanium layers can be controlled by varying the sputtering time. The intermediate layer of titanium results in a better adhesion of the gold to the substrate. Other possible intermediate layering materials include stainless steel and chromium. Titanium is however found to be particularly advantageous.

A pattern of conductive portions forming elements of an electrical circuit is then formed on the substrate surfaces, by removing conductive material from each by, for example, laser ablation (see figure 7d). A suitable laser exposure is five shots of a 200 mJ/cm² . The exposure time and number of shots would be varied for lasers of different power. The pattern of conductive portions defines the two sets of electrodes and corresponding contact portions of the digitizer portion, as well as the connections for connecting the digitiser to the driving and sensing circuits or ASICs. The resistance of each sensing cell is essentially defined by the resistance of the thin layer of gold in the via corresponding to each sensing cell. A 1000Å (or 0.1 µm) thick layer in a via 12.5 µm by 22.5 µm results in a cell resistance of approximately 16 kΩ .

Figure 8 illustrates a flow line production method implementing the method of figure 7.

Although the method described above uses titanium and gold, it is possible to substitute these for stainless steel or chromium, and silver respectively. Furthermore, although the methods described above relate to the production of conductors, it is possible to use the same method with different via configurations or coating materials to produce other electrical elements. Capacitors may be produced by having vias which do not extend right through the substrate so that one produces elements comprising conductive portions separated by a small insulating or dielectric gap. Other electrical components may be made by depositing the appropriate materials (eg semiconductors) on the substrate.

The techniques described above can also be used to proauce electrical components such as integrated circuits.

A 100 µm layer of a plastics insulant such as a polyimide (MYLAR, polyester (KALADEX), polystyrene (UPILEX), polyethylene or polyethylene terephthalate (KAPTON) having a melting point of about 500° or higher, coated with a thin conductive layer (approximately 0.01 µm thick) of a conductor such as stainless steel, titanium or chromium can be processed by laser ablation to produce conductive tracks.

Semiconductor material such as silicon is then deposited on selected portions of both upper and lower surfaces of the substrate for subsequent processing to form electronic devices defining an integrated circuit on both sides of the substrate. The semiconductor material may be deposited by any of the established processes such as diffusion, vacuum deposition or epitaxy. In the preferred embodiment of the invention concerned with the manufacture of integrated circuits, the silicon for producing the electronic components is deposited only where it is required and the electronic components are essentially manufactured at their required positions on the substrate having the conductive tracks. This embodiment obviates the need for the cumbersome removal of semiconductor material using toxic chemicals associated with the known methods of manufacturing integrated circuits.

The integrated circuit elements on opposite sides of such a device are connected via the conductive through vias established in the substrate.

An integrated circuit according to the present invention makes use of both sides of the substrate and it is particularly advantageous to provide a circuit comprising a number of inter-connected double-sided integrated circuits according to the invention arranged on top of each other. Each integrated circuit or surface of an integrated circuit can be made to perform a particular function and a collection of such ICs collated so as to form a data processing circuit.

Integrated circuits or electrical circuits, and/or electrical elements embodying the present invention may also be produced on plastics substrates using any of the known coating methods including immersion processes such as the ATOCHEM process sold by Englehard-CLAL.

## Claims

1. A method of making a digitiser for sensing a fingerprint pattern comprising an array of individually actuable sensing cells, including providing a flexible insulating support (101);
providing holes (103) extending through or partly through the insulating support;
coating both surfaces (106, 107) of the support and the circumference of said holes with conductive and/or semiconductive material (104);
removing conductive or semiconductive material from a first surface of the coated support to form a plurality of first conductive or semiconductive portions (108, 109);
removing conductive or semiconductive material from a second surface of the coated support to form a plurality of second conductive or semiconductive portions (116, 110) separated from and crossing the first conductive or semiconductive portions at locations corresponding to the location of the holes, whereby an electrical coupling may be established between respective first and second conductive or semiconductive portions through the holes on actuating the corresponding portion of the digitiser.

2. A method of making a digitiser according to claim 1 wherein the support is a plastics support.

3. A method according to claim 1, wherein the holes extend through the support.

4. A method according to claim 1, wherein the holes only extend partly through the support.

5. A method according to any preceding claim including:
providing a support comprising a thin sheet of a plastics material such as a polyimide, polyester, polystyrene, polyethylene.

6. A method according to claim 5 including:
providing a support comprising a thin sheet of polyethylene terephthalate.

7. A method according to any preceding claim wherein the conductive material is stainless steel, titanium or chromium.

8. A method according to any preceding claim in which a second layer of a different conductive material is coated onto the first coating of conductive material.

9. A method according to claim 8, wherein the second layer of conductive material has a higher conductivity than the first layer.

10. A method according to claim 9, wherein the first layer is a thin layer of titanium and the second layer is a thin layer of gold.

11. A method according to any of claims 1 to 8, wherein the second layer is a layer of a semiconductive material.

12. A method of making an integrated circuit comprising:
providing a flexible insulating substrate (101);
coating opposite faces (106, 107) of the substrate with a layer of conductive material (104),
making conductive through vias (105) connecting the coated opposite faces of the substrate;
depositing semiconductor material on the coated opposite substrate faces;
processing the deposited semiconductor material to produce electrical or electronic devices; and
removing portions of the conductive layers to define conductive tracks on the surface of the substrate.

13. A method according to claim 12, wherein the substrate comprises a thin sheet of a plastics material such as a polyimide, polyester, polystyrene, polyethylene.

14. A method according to claim 13, wherein the substrate comprises a thin sheet of polyethylene terephthalate.

15. A method according to any of claims 12 to 14, wherein the conductive material is stainless steel, titanium or chromium.

16. A method according to any of claims 12 to 15, in which a second layer of a different conductive material is coated onto the first coating of conductive material.

17. A method according to claim 16, wherein the second layer of conductive material has a higher conductivity than the first layer.

18. A method according to claim 17, wherein the first layer is a thin layer of titanium and the second layer is a thin layer of gold.

19. A method according to any preceding claim where the conductive material and insulating substrate are processed using a laser.

20. A digitiser for sensing a fingerprint pattern comprising an array of individually actuable sensing cells formed on a flexible support (101), the support comprising a thin sheet of a plastics material such as a polyimide, polyester, polystyrene, polyethylene, the digitizer also comprising a layer of a conductive or semi conductive material (104) on both surfaces of the plastic sheet, holes (103) extending through or partly through the coated plastics sheet, the circumference of the holes being coated with conductive or semiconductive material whereby an electrical coupling may be established between the coatings on the two surfaces of the plastics sheet.

21. A digitiser according to claim 20, wherein the support comprises a thin sheet of polyethylene terephthalate.

22. A digitiser according to either of claims 20 or 21, including conductive tracks coated onto the support.

23. An integrated circuit comprising a plurality of electrical elements formed on opposite sides (106, 107) of a flexible support (101) the support comprising a thin sheet of a plastics material such as a polyimide, polyester, polystyrene, polyethylene having conductive vias (105) connecting said opposite sides.

24. An integrated circuit according to claim 23, wherein the support comprises a thin sheet of polyethylene terephthalate.

25. An integrated circuit according to either of claims 23 or 24, including conductive tracks coated onto the support.

26. A circuit including at least two integrated circuits according to any of claims 23 to 25, said integrated circuits being arranged on top of each other.

## Patentansprüche

1. Verfahren zur Herstellung eines Digitalisiergeräts zum Erfassen eines Fingerabdruckmusters, umfassend eine Matrix von individuell zu betätigenden Erfassungszellen, einschließlich des Bereitstellens einer flexiblen Isolierauflage (101);
Erzeugen von Löchern (103), die ganz oder teilweise durch die Isolierauflage verlaufen;
Beschichten beider Oberflächen (106, 107) der Auflage und des Umfangs der genannten Löcher mit leitendem und/oder halbleitendem Material (104);
Entfernen des leitenden oder halbleitenden Materials von einer ersten Oberfläche der beschichteten Auflage zur Bildung einer Mehrzahl von ersten leitenden oder halbleitenden Abschnitten (108, 109);
Entfernen von leitendem oder halbleitendem Material von einer zweiten Oberfläche der beschichteten Auflage zur Bildung einer Mehrzahl von zweiten leitenden oder halbleitenden Abschnitten (116, 110), die von den ersten leitenden oder halbleitenden Abschnitten an Positionen getrennt sind und diese kreuzen, die der Position der Löcher entsprechen, so dass nach dem Betätigen des entsprechenden Abschnitts des Digitalisiergeräts eine elektrische Verbindung zwischen jeweiligen ersten und zweiten leitenden oder halbleitenden Abschnitten durch die Löcher hergestellt werden kann.

2. Verfahren zur Herstellung eines Digitalisiergeräts nach Anspruch 1, wobei die Auflage eine Kunststoffauflage ist.

3. Verfahren nach Anspruch 1, wobei die Löcher durch die Auflage verlaufen.

4. Verfahren nach Anspruch 1, wobei die Löcher nur teilweise durch die Auflage verlaufen.

5. Verfahren nach einem der vorherigen Ansprüche, das Folgendes umfasst:
Bereitstellen einer Auflage, umfassend eine dünne Folie aus einem Kunststoffmaterial wie z.B. aus Polyimid, Polyester, Polystyrol, Polyethylen.

6. Verfahren nach Anspruch 5, das Folgendes umfasst:
Bereitstellen einer Auflage, die eine dünne Folie aus Polyethylenterephthalat umfasst.

7. Verfahren nach einem der vorherigen Ansprüche, wobei das leitende Material Edelstahl, Titan oder Chrom ist.

8. Verfahren nach einem der vorherigen Ansprüche, bei dem eine zweite Schicht aus einem anderen leitenden Material auf die erste Schicht aus leitendem Material aufgetragen wird.

9. Verfahren nach Anspruch 8, wobei die zweite Schicht aus leitendem Material eine höhere Leitfähigkeit hat als die erste Schicht.

10. Verfahren nach Anspruch 9, wobei die erste Schicht eine dünne Schicht aus Titan und die zweite Schicht eine dünne Schicht aus Gold ist.

11. Verfahren nach einem der Ansprüche 1 bis 8, wobei die zweite Schicht eine Schicht aus einem halbleitenden Material ist.

12. Verfahren zur Herstellung einer integrierten Schaltung, umfassend die folgenden Schritte:
Bereitstellen eines flexiblen Isoliersubstrats (101);
Beschichten gegenüberliegender Flächen (106, 107) des Substrats mit einer Schicht aus leitendem Material (104);
Herstellen von leitenden Durchkontaktierungen (105), die die beschichteten gegenüberliegenden Flächen des Substrats verbinden;
Auftragen von Halbleitermaterial auf die beschichteten gegenüberliegenden Substratflächen;
Verarbeiten des aufgetragenen Halbleitermaterials zum Erzeugen von elektrischen oder elektronischen Bauelementen; und
Entfernen von Abschnitten der leitenden Schichten zum Definieren von Leiterbahnen auf der Oberfläche des Substrats.

13. Verfahren nach Anspruch 12, wobei das Substrat eine dünne Folie aus einem Kunststoffmaterial wie z.B. aus Polyimid, Polyester, Polystyrol, Polyethylen umfasst.

14. Verfahren nach Anspruch 13, wobei das Substrat eine dünne Folie aus Polyethylenterephthalat umfasst.

15. Verfahren nach einem der Ansprüche 12 bis 14, wobei das leitende Material Edelstahl, Titan oder Chrom ist.

16. Verfahren nach einem der Ansprüche 12 bis 15, bei dem eine zweite Schicht aus einem anderen leitenden Material auf die erste Schicht aus leitendem Material aufgetragen wird.

17. Verfahren nach Anspruch 16, wobei die zweite Schicht aus leitendem Material eine höhere Leitfähigkeit hat als die erste Schicht.

18. Verfahren nach Anspruch 17, wobei die erste Schicht eine dünne Schicht aus Titan und die zweite Schicht eine dünne Schicht aus Gold ist.

19. Verfahren nach einem der vorherigen Ansprüche, wobei das leitende Material und das Isoliersubstrat mit einem Laser verarbeitet werden.

20. Digitalisiergerät zum Erfassen eines Fingerabdruckmusters, umfassend eine Matrix aus individuell zu betätigenden Erfassungszellen, die auf einer flexiblen Auflage (101) ausgebildet sind, wobei die Auflage Folgendes umfasst: eine dünne Folie aus einem Kunststoffmaterial wie Polyimid, Polyester, Polystyrol, Polyethylen, wobei das Digitalisiergerät auch eine Schicht aus einem leitenden oder halbleitenden Material (104) auf beiden Oberflächen der Kunststofffolie aufweist, wobei Löcher (103) ganz oder teilweise durch die beschichtete Plastikfolie verlaufen, wobei der Umfang der Löcher mit leitendem oder halbleitendem Material beschichtet ist, so dass eine elektrische Verbindung zwischen den Beschichtungen auf den beiden Oberflächen der Plastikfolie hergestellt werden kann.

21. Digitalisiergerät nach Anspruch 20, wobei die Auflage eine dünne Folie aus Polyethylenterephthalat umfasst.

22. Digitalisiergerät nach Anspruch 20 oder 21 mit auf die Auflage aufgetragenen Leiterbahnen.

23. Integrierte Schaltung, umfassend eine Mehrzahl von elektrischen Elementen, die auf gegenüberliegenden Seiten (106, 107) einer flexiblen Auflage (101) ausgebildet sind, wobei die Auflage eine dünne Folie aus einem Kunststoffmaterial wie Polyimid, Polyester, Polystyrol, Polyethylen mit leitenden Durchkontaktierungen (105) umfasst, die die genannten gegenüberliegenden Seiten verbinden.

24. Integrierte Schaltung nach Anspruch 23, wobei die Auflage eine dünne Folie aus Polyethylenterephthalat umfasst.

25. Integrierte Schaltung nach Anspruch 23 oder 24 mit auf die Auflage aufgetragenen Leiterbahnen.

26. Schaltung mit wenigstens zwei integrierten Schaltungen nach einem der Ansprüche 23 bis 25, wobei die genannten integrierten Schaltungen aufeinander angeordnet sind.

## Revendications

1. Procédé de fabrication d'un numériseur pour détecter un motif d'empreinte digitale comprenant une matrice de cellules de détection actionnables individuellement, comportant la fourniture d'un support isolant souple (101) ;
la fourniture de trous (103) s'étendant à travers ou partiellement à travers le support isolant ;
le revêtement d'une matière conductrice et/ou semi-conductrice (104)sur les deux surfaces (106, 107) du support et la circonférence desdits trous ;
l'élimination de matière conductrice ou semi-conductrice sur une première surface du support revêtu afin de former une pluralité de premières parties conductrices ou semi-conductrices (108, 109) ;
l'élimination de matière conductrice ou semi-conductrice sur une deuxième surface du support revêtu afin de former une pluralité de deuxièmes parties conductrices ou semi-conductrices (116, 110) séparées des premières parties conductrices ou semi-conductrices et croisant celles-ci à des emplacements correspondant aux emplacements des trous, de telle sorte qu'un couplage électrique puisse être établi entre des premières et deuxièmes parties conductrices ou semi-conductrices respectives à travers les trous lors de l'actionnement de la partie correspondante du numériseur.

2. Procédé de fabrication d'un numériseur selon la revendication 1, dans lequel le support est un support en plastique.

3. Procédé selon la revendication 1, dans lequel les trous s'étendent à travers le support.

4. Procédé selon la revendication 1, dans lequel les trous ne s'étendent que partiellement à travers le support.

5. Procédé selon l'une quelconque des revendications précédentes, comportant :
la fourniture d'un support comprenant une fine couche d'une matière plastique telle que du polyimide, du polyester, du polystyrène, du polyéthylène.

6. Procédé selon la revendication 5, comportant :
la fourniture d'un support comprenant une fine couche de téréphtalate de polyéthylène.

7. Procédé selon l'une quelconque des revendications précédentes, dans lequel la matière conductrice est de l'acier inoxydable, du titane ou du chrome.

8. Procédé selon l'une quelconque des revendications précédentes, dans lequel une deuxième couche d'une matière conductrice différente est revêtue sur le premier revêtement de matière conductrice.

9. Procédé selon la revendication 8, dans lequel la deuxième couche de matière conductrice a une conductivité supérieure à celle de la première couche.

10. Procédé selon la revendication 9, dans lequel la première couche est une fine couche de titane et la deuxième couche est une fine couche d'or.

11. Procédé selon l'une quelconque des revendications 1 à 8, dans lequel la deuxième couche est une couche de matière semi-conductrice.

12. Procédé de fabrication d'un circuit intégré, comprenant :
la fourniture d'un substrat isolant souple (101) ;
le revêtement d'une couche de matière conductrice (104) sur des faces opposées (106, 107) du substrat;
la réalisation de vias débouchantes conductrices (105) connectant les faces opposées revêtues du substrat ;
le dépôt de matière semi-conductrice sur les faces de substrat opposées revêtues ;
le traitement de la matière semi-conductrice déposée afin de produire des dispositifs électriques ou électroniques ; et
l'élimination de parties des couches conductrices afin de définir des pistes conductrices sur la surface du substrat.

13. Procédé selon la revendication 12, dans lequel le substrat comprend une fine couche de matière plastique telle que du polyimide, du polyester, du polystyrène, du polyéthylène.

14. Procédé selon la revendication 13, dans lequel le substrat comprend une fine feuille de téréphtalate de polyéthylène.

15. Procédé selon l'une quelconque des revendications 12 à 14, dans lequel la matière conductrice est de l'acier inoxydable, du titane ou du chrome.

16. Procédé selon l'une quelconque des revendications 12 à 15, dans lequel une deuxième couche d'une matière conductrice différente est revêtue sur le premier revêtement de matière conductrice.

17. Procédé selon la revendication 16, dans lequel la deuxième couche de matière conductrice a une conductivité supérieure à celle de la première couche.

18. Procédé selon la revendication 17, dans lequel la première couche est une fine couche de titane et la deuxième couche est une fine couche d'or.

19. Procédé selon l'une quelconque des revendications précédentes, dans lequel la matière conductrice et le substrat isolant sont traités au moyen d'un laser.

20. Numériseur pour détecter un motif d'empreinte digitale comprenant une matrice de cellules de détection actionnables individuellement formées sur un support souple (101), le support comprenant une fine couche d'une matière plastique telle que du polyimide, du polyester, du polystyrène, du polyéthylène, le numériseur comprenant aussi une couche de matière conductrice ou semi-conductrice (104) sur les deux surfaces de la feuille plastique, des trous (103) s'étendant à travers ou partiellement à travers la feuille plastique revêtue, la circonférence des trous étant revêtue d'une matière conductrice ou semi-conductrice de telle sorte qu'un couplage électrique puisse être établi entre les revêtements sur les deux surfaces de la feuille plastique.

21. Numériseur selon la revendication 20, dans lequel le support comprend une fine feuille de téréphtalate de polyéthylène.

22. Numériseur selon la revendication 20 ou 21, comportant des pistes conductrices revêtues sur le support.

23. Circuit intégré comprenant une pluralité d'éléments électriques formés sur des côtés opposés (106, 107) d'un support souple (101), le support comprenant une fine couche de matière plastique telle que du polyimide, du polyester, du polystyrène, du polyéthylène ayant des vias conductrices (105) connectant lesdits côtés opposés.

24. Circuit intégré selon la revendication 23, dans lequel le support comprend une fine feuille de téréphtalate de polyéthylène.

25. Circuit intégré selon la revendication 23 ou 24, comportant des pistes conductrices revêtues sur le support.

26. Circuit comportant au moins deux circuits intégrés selon l'une quelconque des revendications 23 à 25, lesdits circuits intégrés étant agencés l'un au-dessus de l'autre.
